(19) Europäisches Patentamt
European Patent Office
Office européen des brevets

(11) Publication number: **0 151 167**
**B1**

(12) # EUROPEAN PATENT SPECIFICATION

(45) Date of publication of patent specification: **11.11.87**

(51) Int. Cl.⁴: **C 08 G 59/02**

(21) Application number: **84902892.3**

(22) Date of filing: **20.07.84**

(86) International application number: **PCT/US 84/01156**

(87) International publication number: **WO/8500611 (14.02.85 Gazette 85/04)**

(54) **PHOSPHORAMIDE EPOXY RESINS.**

(30) Priority: **25.07.83 US 516829**

(43) Date of publication of application: **14.08.85 Bulletin 85/33**

(45) Publication of the grant of the patent: **11.11.87 Bulletin 87/46**

(84) Designated contracting states: **CH DE FR GB LI NL**

(56) References cited:
NL-A- 272 599
US-A- 2 939 849
US-A- 3 281 502
US-A- 3 516 965
US-A- 3 933 738
US-A- 4 164 487
US-A- 4 316 922

(73) Proprietor: **THE DOW CHEMICAL COMPANY**
**2030 Dow Center Abbott Road P.O. Box 1967**
**Midland, MI 48640 (US)**

(72) Inventor: **BERTRAM, James, L.**
**115 Southern Oaks Drive**
**Lake Jackson, TX 77566 (US)**

(74) Representative: **Sternagel, Hans-Günther, Dr. et al**
**Patentanwälte Dr. Michael Hann Dr. H.-G. Sternagel**
**Sander Aue 30**
**D-5060 Bergisch Gladbach 2 (DE)**

**EP 0 151 167 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

**Description**

The present invention concerns epoxy resins prepared from phosphoramide materials and cured compositions thereof.

Epoxy resins have been cured with phosphoramide compounds thereby putting phosphorus atoms in the backbone of the cured product. The present invention places phosphorus atoms into the backbone via the epoxy resin rather than the curing agent thereby providing for a varying range of properties by providing a choice of curing agents rather than a choice of epoxy resin.

The present invention concerns an epoxy resin which results from dehydrohalogenating the reaction product of an excess of at least one epihalohydrin with at least one phosphoramide compound represented by the formula

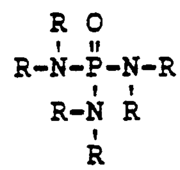

wherein each R is independently hydrogen or a hydrocarbyl or an inertly substituted hydrocarbyl group having from 1 to 20, preferably from 1 to 10, carbon atoms, with the proviso that at least 2 of the R groups are hydrogen, and removing the excess epihalohydrin. The term hydrocarbyl means a monovalent organic hydrocarbon group. The term inertly substituted means that the hydrocarbon group can contain substituent groups which do not interfere with the reaction with an epihalohydrin or the subsequent dehydrohalogenation reaction. Such substituents include, for example, aryloxy, alkoxy, hydroxyalkyl, chlorine, or bromine.

The epoxy resin of the present invention may also be represented by the formula

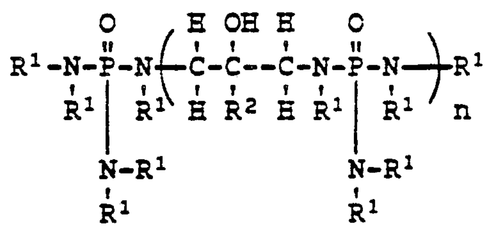

wherein each $R^2$ is independently hydrogen or an alkyl group having from 1 to 4 carbon atoms ; each $R^1$ is independently a hydrocarbyl or an inert substituted hydrocarbyl group having from 1 to 20, preferably from 1 to 10 carbon atoms or

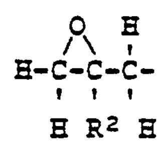

with the proviso that at least 2 of the $R^1$ groups are

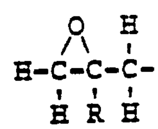

and n has an average value of from zero to 10, preferably from zero to 2.

The present invention also concerns curable compositions containing the aforementioned epoxy resins and, a curing quantity of one or more suitable curing agents.

Further, the present invention concerns cured compositions resulting from subjecting the aforementioned curable composition to curing conditions.

Suitable epihalohydrins which can be employed herein include those represented by the formula

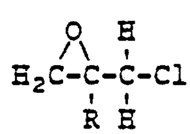

wherein R is an alkyl group having from 1 to 4 carbon atoms.

Particularly suitable epihalohydrins include, for example, epichlorohydrin, epibromohydrin, epiiodohydrin, methylepichlorohydrin, methylepibromohydrin, methylepiiodohydrin, or mixtures thereof.

Particularly suitable phosphoramides include, for example, methylphosphoramide, dimethylphosphoramide, trimethylphosphoramide, ethylphosphoramide, diethylphosphoramide, triethylphosphoramide, propylphosphoramide, dipropylphosphoramide, tripropylphosphoramide, butylphosphoramide, dibutylphosphoramide, tributylphosphoramide, phenylphosphoramide, diphenylphosphoramide, triphenylphosphoramide, or mixtures thereof.

The reaction between the epihalohydrin and the phosphoramide is usually, but not necessarily, conducted in the presence of a catalyst. Suitable catalysts include, for example, quaternary ammonium compounds, phosphonium compounds, sulfonium compounds, tertiary amines, metal hydroxides, or metal alkoxides.

Suitable quaternary ammonium catalysts include, for example, tetramethylammonium chloride, benzyltrimethylammonium chloride, triethanolammonium chloride, tetraethanolammonium hydroxide, or dodecyldimethylbenzyl ammonium naphthenate.

Suitable phosphonium catalysts include, for example, those quaternary phosphonium compounds disclosed in U.S. Pat. Nos. 3 948 855 ; 3 477 990 and 3 341 580 and Canadian 858 648. Particularly suitable such catalysts include, for example, ethyltriphenylphosphonium iodide, ethyltriphenylphosphonium bicarbonate, ethyltriphenylphosphonium acetate acetic acid complex, benzyltriphenylphosphonium chloride, tetrabutylphosphonium chloride, benzyltrimethylammonium chloride or mixtures thereof.

Suitable sulfonium catalysts include thiourea catalysts such as, for example, tetramethylthiourea ; N,N'-dimethylthiourea ; N,N'-diphenylthiourea ; or mixtures thereof as well as thiodiethanol and other sulfonium precursors.

Suitable tertiary amines include, for example, diethylenetriamine, N-methylmorpholine, triethylamine, tributylamine, benzyldimethylamine, tris(dimethylaminomethyl)phenol, or mixtures thereof.

Also suitable as catalysts are the basic ion exchange resins such as, for example, DOWEX MSA-1, DOWEX SBR, or mixtures thereof.

Although it is not necessary, the reaction is preferably conducted in the presence of an inert diluent or solvent such as, for example, alcohols, glycol ethers, ketones, or mixtures thereof.

Particularly suitable solvents or diluents include, for example, ethylene glycol monomethylether, ethylene glycol monoethylether, ethylene glycol monobutylether, isopropyl alcohol, butyl alcohol, or mixtures thereof.

The reaction between the phosphoramide compound and the epihalohydrin can be conducted at a temperature of from 25 °C to 160 °C, preferably from 50 °C to 120 °C, and at a pressure of from 20 mm of Hg (2.7 kPa) to 6 000 mm of Hg (800 kPa), preferably from 80 mm of Hg (10.7 kPa) to 760 mm of Hg (101.3 kPa) for a time sufficient to complete the reaction to the degree desired. The actual time varies with temperature and pressure, but usually times of from about 30 min. (1 800 s) to about 48 hours (172 800 s) is sufficient.

The dehydrohalogenation can be accomplished with basic acting materials including, for example, alkali metal hydroxides, carbonates, aluminates, silicates, or zincates. Particularly suitable are, for example, sodium hydroxide, potassium hydroxide, sodium carbonate, or mixtures thereof.

The dehydrohalogenation reaction can be conducted at temperatures of from 25 °C to 120 °C, preferably from 40 °C to 80 °C, and at a pressure of from 20 mm of Hg (2.7 kPa) to 760 mm of Hg (101.3 kPa), preferably from 50 mm of Hg (6.7 kPa) to 300 mm of Hg (40.0 kPa) for a time sufficient to complete the reaction to the degree desired. The actual time varies with temperature and pressure, but usually times of from 30 min. (1 800 s) to 6 hours (21 600 s) is sufficient.

The reactants are employed in quantities which provide a ratio of equivalents of epihalohydrin to equivalents of active hydrogens on the phosphoramide compound of from 2 : 1 to 12 : 1, preferably from 4 : 1 to 6 : 1 ; a ratio of equivalents of the optional catalyst to equivalents of active hydrogens on the phosphoramide compound of up to 0.5 : 1, preferably from 0.01 : 1 to 0.1 : 1 ; optionally, a quantity of solvent of up to 50, preferably from 20 to 40 percent by weight of the quantity of epihalohydrin employed ; and the dehydrohalogenation agent is employed in a quantity which provides a ratio of equivalents of dehydrohalogenating agent to equivalent of active hydrogen atom on the phosphoramide compound of from 0.9 : 1 to 3 : 1, preferably from 1.1 : 1 to 2 : 1.

The epoxy resins of the present invention can be cured with any of the known curing agents such as, for example, primary amines, acids, acid anhydrides, biguanides, secondary amines, tertiary amines, Lewis Acids, or mixtures thereof. Particularly suitable curing agents include, for example, methylene dianiline, ethylenediamine, diethylenetriamine, triethylenetetramine, diaminodiphenylsulfone, nadicmethyl anhydride, dicyanamide, 2-methylimidazol, or mixtures thereof.

The compositions of the present invention are useful in the preparation of castings, laminates, or coatings.

In addition to the epoxy resin and curing agent, the compositions may also contain pigments, dyes, fillers, flow control agents, solvents, rubber modifiers, and combinations thereof.

The following examples are illustrative of the present invention but are not to be construed as to limiting the scope thereof in any manner.

Example 1

N,N',N''-triphenylphosphoramide (21.54 g), 111.0 g of epichlorohydrin, and 0.74 g of benzyltrimethylammonium chloride were heated at 120 °C for one hour (3 600 s). The solution was then cooled to 65 °C, and 47.6 g of ethylene glycol monomethylether (available from The Dow Chemical Company as DOWANOL® PM), and 1.6 g of water were added. This solution was then heated at 65 °C under approximately 180 mm of Hg (24.0 kPa) pressure such as to give a gentle distillation. The reaction vessel was fitted with a device such that the distillate could be separated into two layers, and the heavier bottom layer recycled to the reaction. Sodium hydroxide (32 g of 50 percent aqueous solution) was slowly added during approximately 4 1/2 hours (16 200 s), then cooled and the salt formed was removed via filtration. The excess epichlorohydrin and solvent were removed by vacuum distillation at 100 °C and about 1 mm of Hg (133 Pa) pressure. The resinous product was a viscous semisolid at ambient temperature. It had an epoxide content of 17.3 percent (EEW = ~ 249), and a hydrolyzable chloride content of 0.13 percent.

Example 2

N,N',N''-tributylphosphoramide (17.56 g), 92.5 g of epichlorohydrin, and 0.37 g of benzyl trimethylammonium chloride were heated at 50 °C for 24 hours (86 400 s), then at 90 °C for an additional 5 hours (18 000 s). The solution was then cooled to 65 °C and 49.8 g of isopropanol and 8.0 g of water was added. Sodium hydroxide (36 g of a 20 percent aqueous solution) was slowly added during approximately 45 minutes (2 700 s), then digested at 65 °C for an additional 15 minutes (900 s). The aqueous layer was then separated, and an additional 16 g of 20 percent aqueous sodium hydroxide was added during approximately 15-20 minutes (900-1 200 s), then digested for an additional 15 minutes (900 s). The mixture was then cooled to 25 °C. The aqueous layer separated, and the organic phase washed with excess water till free of salt and sodium hydroxide. The excess epichlorohydrin and solvent were then removed via vacuum distillation at 100 °C and approximately 1 mm Hg (133 Pa) pressure. The product was a viscous liquid with an epoxy content of 15.8 percent (EEW = ~ 272).

**Claims**

1. An epoxy resin which results from dehydrohalogenating the reaction product of an excess of at least one epihalohydrin with at least one phosphoramide compound represented by the formula

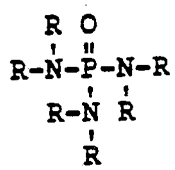

wherein each R is independently hydrogen or a hydrocarbyl group or an inertly substituted hydrocarbyl group having from 1 to 20 carbon atoms, with the proviso that at least 2 of the R groups are hydrogen, and removing the excess epihalohydrin.

2. The epoxy resin of Claim 1 wherein each R of the phosphoramide compound is independently hydrogen or a hydrocarbyl or substituted hydrocarbyl group having from 1 to 10 carbon atoms and said epihalohydrin is epichlorohydrin.

3. The epoxy resin of Claim 2 wherein each R of the phosphoramide compound is independently hydrogen, methyl, ethyl, propyl, butyl or phenyl with the proviso that at least 3 of the R groups are hydrogen.

**Patentansprüche**

1. Epoxiharz, das aus Dehydrohalogenierung des Reaktionsproduktes eines Überschusses mindestens eines Epihalohydrins mit mindestens einer Phosphoramidverbindung der Formel

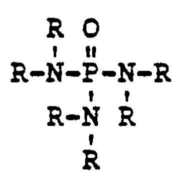

in der jedes R unabhängig voneinander Wasserstoff oder Kohlenwasserstoffgruppe oder eine inert substituierte Kohlenwasserstoffgruppe mit ein bis zwangiz Kohlenstoffatomen ist, mit der Bedingung,

daß mindestens zwei der R-Gruppen Wasserstoff sind und Entfernen des Überschusses an Epihalohydrin, stammt.

2. Epoxiharz nach Anspruch 1, dadurch gekennzeichnet, daß jedes R der Phosphoramidverbindung unabhängig voneinander Wasserstoff oder eine Kohlenwasserstoff- oder substituierte Kohlenwasserstoffgruppe mit ein bis zehn Kohlenstoffatomen ist und das Epihalohydrin Epichlorhydrin ist.

3. Epoxiharz nach Anspruch 2, dadurch gekennzeichnet, daß jedes R der Phosphoramidverbindung unabhängig voneinander Wasserstoff, Methyl, Ethyl, Propyl, Butyl oder Phenyl ist, mit der Bedingung, daß mindestens drei der R Gruppen Wasserstoff sind.

**Revendications**

1. Résine époxy qui provient de la déshydrohalogénation du produit de réaction d'un excès d'au moins une épihalogénhydrine avec au moins un composé phosphoramide répondant à la formule :

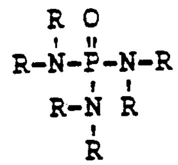

dans laquelle chaque R représente indépendamment un atome d'hydrogène ou un groupe hydrocarboné ou un groupe hydrocarboné à substituant(s) inerte(s), comportant de 1 à 20 atomes de carbone, à la condition qu'au moins 2 des groupes R soient des atomes d'hydrogène, et de l'élimination de l'excès d'épihalogénhydrine.

2. Résine époxy selon la revendication 1, dans laquelle chaque R du composé phosphoramide représente indépendamment un atome d'hydrogène ou un groupe hydrocarboné ou hydrocarboné substitué comportant de 1 à 10 atomes de carbone, et ladite épihalogénhydrine est l'épichlorhydrine.

3. Résine époxy selon la revendication 2, dans laquelle chaque R du composé phosphoramide représente indépendamment un atome d'hydrogène ou un groupe méthyle, éthyle, propyle, butyle ou phényle, à la condition qu'au moins 3 des groupes R soient des atomes d'hydrogène.